# EUROPÄISCHE PATENTSCHRIFT

(11) **EP 1 229 812 B1**
(45) Veröffentlichungstag und Bekanntmachung des Hinweises auf die Patenterteilung: **03.12.2003**
(21) Anmeldenummer: 00979569.1
(22) Anmeldetag: 16.11.2000
(51) Int. Cl.: A47C 31/02

(54) **VORRICHTUNG ZUM BEFESTIGEN EINES BEZUGES AN EINEM SCHAUMKÖRPERTEIL, INSBESONDERE EINEM POLSTERSCHAUMTEIL FÜR EINEN FLUG- ODER FAHRGASTSITZ**
DEVICE FOR FIXING A COVER TO A FOAM BODY, IN PARTICULAR A FOAM UPHOLSTERY PART FOR AN AIRCRAFT OR VEHICLE SEAT
DISPOSITIF DE FIXATION D'UNE GARNITURE SUR UNE PIECE EN MOUSSE, EN PARTICULIER UNE PIECE DE REMBOURRAGE EN MOUSSE, DESTINEE A UN SIEGE D'AVION OU DE VEHICULE

(30) Priorität: 20.11.1999 DE 19955990
(43) Veröffentlichungstag der Anmeldung: 14.08.2002
(73) Patentinhaber: Gottlieb Binder GmbH & Co., 71088 Holzgerlingen (DE)
(72) Erfinder: POULAKIS, Konstantinos, 71157 Hildrizhausen (DE); NÄGELE, Klaus, 78727 Oberndorf a.N. (DE)
(74) Vertreter: Bartels, Martin Erich Arthur
(86) Internationale Anmeldenummer: EP0011332
(87) Internationale Veröffentlichungsnummer: WO01037710

(56) Entgegenhaltungen:
- US-A- 4 931 344
- US-A- 5 101 539

## Beschreibung

Die Erfindung betrifft eine Vorrichtung zum Befestigen eines Bezuges an einem Schaumkörperteil mit den Merkmalen des Oberbegriffes des Patentanspruches 1.

Die Befestigung von Sitzbezügen an Schaumkörperteilen mit Hilfe von in Vertiefungen des Schaumkörperteiles verankerten Haftverschlußelementen gestaltet sich in mehrerer Hinsicht problematisch. Bei der geringen Breite, wie sie sich aus optischen und funktionalen Gründen für die nutartigen Vertiefungen im Schaumkörperteil ergibt, in denen die Faltung als Bezugsteil des Sitzbezuges aufzunehmen und zu verankern ist, steht lediglich eine verhältnismäßig schmale Berührungs- oder Aufstandsfläche für die Kontaktbildung zwischen Haftverschlußelement und zugewandter stirnseitiger Endfläche der Faltung des Bezuges zur Verfügung. Um ausreichende Verankerungskräfte zu erreichen, ist man daher bestrebt, mit Hilfe geeigneter Formelemente eine möglichst flache vollflächige Auflage des Flauschelementes am Haftverschlußteil zu erreichen. Beispielsweise indem zwischen Sitzbezug und Flauschelement ein Formelement in Form eines Steges eingefügt wird, an dessen Ende das Flauschelement als flaches Flauschband angebracht ist (vgl. PCT WO 98/22307).

Zur Vermeidung dieser Probleme ist in der nachveröffentlichten DE 199 38 877 A1 ein Formelement vorgeschlagen worden mit Nachgiebigkeit und zumindest teilweiser Formerholungsfähigkeit, um derart die Möglichkeit zu eröffnen, anstelle der üblichen Haftverschlußelemente, wie sie bislang ausschließlich bei Befestigungsvorrichtungen der hier betrachteten Art einsetzbar waren, durch "intelligente" Verschlußsysteme zu ersetzen, beispielsweise indem man ein sogenanntes Mikro-Haftverschlußteil zur Anwendung bringt, wie es aus der DE 198 28 856 bekannt ist. Bei den erwähnten Mikrohaftverschlußteilen mit in hoher Packungsdichte angeordneten Mikroverhakungselementen in Form von auf sehr kurzen Stengeln befindlichen pilzartigen Köpfen erfolgt das Zusammenfahren der zu verhakenden Verschlußteile nicht nur in Richtung des Flächenlotes, sondern auch zumindest kleinräumig in zum Flächenlot quer verlaufenden Bewegungskomponenten. Diese entstehen durch die Nachgiebigkeit des Formelementes, indem das Material des Formelementes unter der Druckbelastung beim Kontaktieren gewissermaßen arbeitet und dadurch den sicheren Verhakungseingriff mit den Mikroverhakungsteilen bewirkt.

Nachteilig bei der zuletzt genannten Lösung ist, daß die eine Art an Haftverschlußteilen als Mikrohaftverschluß im nutartigen Grund der Vertiefung innerhalb des Schaumkörperteiles angeordnet ist, wo wenig Kontaktfläche für die Verhaftung mit der anderen Art an Haftverschlußteilen zur Verfügung steht. Sind aufwendige dreidimensionale Geometrien zu realisieren, soll also beispielsweise der Mikrohaftverschluß einer entlang des nutenartigen Grundes verlaufenden bogenartigen Vertiefung folgen, ist der Verschluß in der Krümmungsrichtung derart biegesteif ausgelegt, daß er der Kontur nicht ohne weiteres nachfolgen kann, sondern beispielsweise speziell auf diese angepaßt aus einem größeren Bandmaterial ausgeschnitten werden muß. Dies führt zu erhöhten Kosten bei der Herstellung der bekannten Lösungen.

Durch die US-A-5,101,539 ist eine gattungsgemäße Vorrichtung bekannt, bei der die nutartige Vertiefung im Schaumkörperteil einen U-förmigen Querschnitt aufweist, wobei dem U-bogenförmigen Verlauf nachfolgend in die nutartige Vertiefung als Haftverschlußteil ein Flausch- oder ein Hakenteil durchgehend verlaufend eingesetzt ist. Ein korrespondierend ausgebildetes keilartiges Verschlußteil mit Verschlußhaken bzw. einem Verschlußflausch erlaubt dann aufgrund der konkaven Ausgestaltung der jeweiligen Verschlußhaken ein erleichtertes Eindringen in die nutartige Vertiefung sowie ein erschwertes Außereingriffbringen, was an sich zu guten Verschlußund Verhakungsergebnissen führt. Aufgrund des gleichermaßen nachgiebigen Materialverhaltens des in der nutartigen Vertiefung angeordneten Verschlußteils kommt es jedoch beim Eindringen des korrespondierenden Haftverschlußteils begünstigt durch den Polsterschaum zu Verdrängungsund Ausweichvorgängen, was den Erhalt einer Befestigung mit hohen Verschlußkräften beinträchtigt.

Ausgehend von diesem Stand der Technik liegt der Erfindung die Aufgabe zugrunde, bei einer Vorrichtung zum Befestigen eines Bezuges an einem Schaumkörperteil die vorstehend bezeichneten Nachteile zu vermeiden, insbesondere ein Befestigungssystem zu schaffen, das zum einen zu hohen Verschlußkräften führt, und zum anderen in der Lage ist, ohne größere Modifikationen auch kompliziert verlaufenden Bahngeometrien innerhalb des Schaumkörperteiles nachzufolgen. Eine dahingehende Aufgabe löst eine Vorrichtung mit den Merkmalen des Anspruches 1.

Dadurch, daß gemäß dem kennzeichnenden Teil des Patentanspruches 1 das eine Haftverschlußteil in seiner Längsrichtung biegbar und quer zu seiner Längsrichtung biegesteif ausgebildet ist, steht an der jeweiligen Seitenwand der Vertiefung des Schaumkörperteils regelmäßig nicht nur eine größere Kontaktfläche für die Verhakung der beiden Haftverschlußteile zur Verfügung, sondern aufgrund der Orientierung des Haftverschlußteils in seiner biegbaren Längsrichtung ist erreicht, daß seine Biegesteifigkeit entlang der Längwand verläuft, mit der Folge, daß im Bereich des Eingriffes der Haftverschlußteile zum Haftverschluß eine steife Auslegung gegeben ist, die der sicheren Befestigung dient. Aufgrund der biegbaren Längsausrichtung des Haftverschlußteils an der Seitenwand ist darüber hinaus gewährleistet, daß auch kompliziert aufbauende geometrische Strukturen im Polsterschaumteil ohne weiteres von dem Haftverschlußteil nachvollzogen werden können.

Zu einer besonders starken und sicheren Befestigung kommt es, sofern beide Seitenwände der Vertiefung im Schaumkörperteil an ihren einander zugewandten Seiten das eine Haftverschlußteil aufweisen. Insbesondere kommt es beim Zug an dem Polsterbezugstoff zu einer Klemmwirkung auf die Faltung des Bezuges, so daß diese verstärkt innerhalb des Schaumkörperteiles festgehalten wird.

Weitere vorteilhafte Ausführungsformen sind Gegenstand der Unteransprüche.

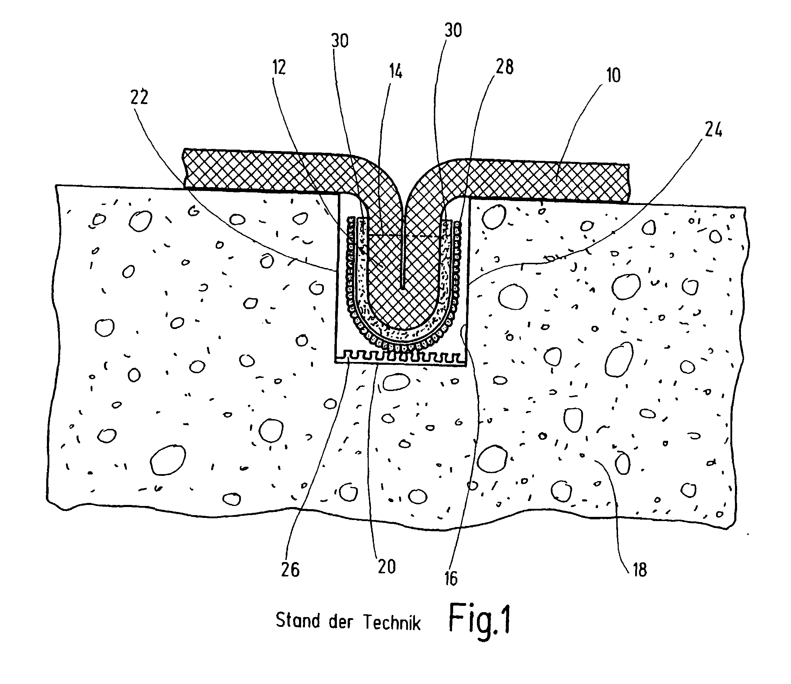

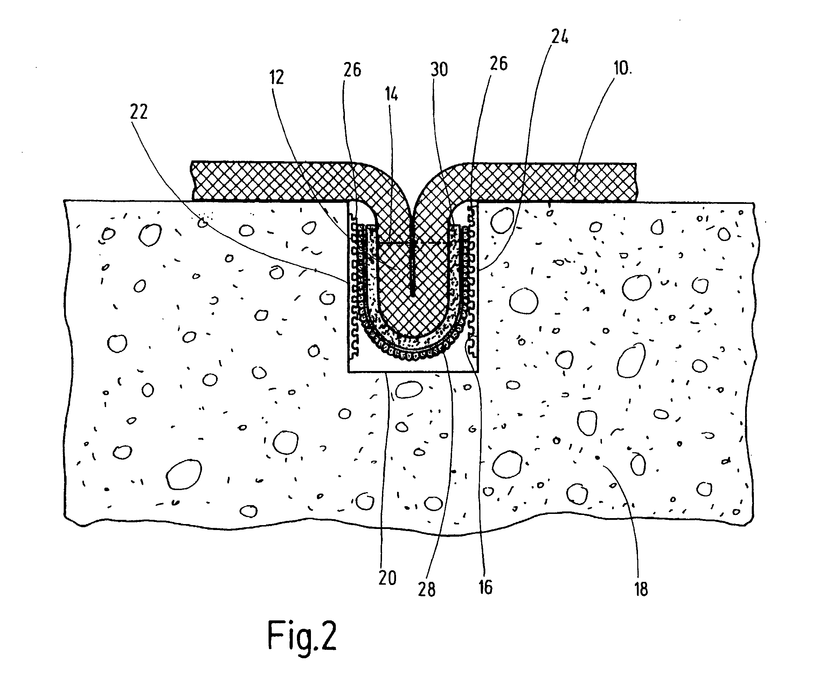

Nachstehend ist die Erfindung anhand der Zeichnungen im einzelnen erläutert, wobei sich die Fig. 1 auf eine Lösung nach dem Stand der Technik bezieht und die Fig. 2 auf eine solche nach der Erfindung. Die Figuren zeigen jeweils einen vergrößerten abgebrochenen und stark schematisch vereinfacht gezeichneten Querschnitt der Verankerungsstelle der Faltung eines Sitzbezuges, wobei an der Verankerung beteiligte Verhakungs-oder Verschlußteile zur Verdeutlichung übertrieben groß dargestellt sind.

Die Fig. 1 zum Stand der Technik zeigt einen Sitzbezug 10 im Bereich einer im wesentlichen U-förmigen Faltung 12, die durch Abnähen an einer bei 14 angedeuteten Nahtlinie gebildet ist. Die Faltung 12 dient der Verankerung des Bezuges 10 in einer Nut oder kanalartigen Vertiefung 16 in einem als Polsterkörper dienenden Schaumkörperteil 18 aus Polyurethanschaum. Die Vertiefung 16 weist einen nutartigen Grund 20 auf sowie zwei quer dazu verlaufende Seitenwände 22, 24, die im wesentlichen eine vertikale Orientierung haben.

Die Vertiefung 16 kann bei der Herstellung des Schaumkörperteiles 18 durch Einschäumen in einer Einschäumform mit Hilfe eines in die Einschäumform eingelegten Formteils ausgebildet werden. Gleichzeitig kann hierbei am Grund der Vertiefung 16 ein Haftverschlußteil 26 verankert werden, indem es durch Anschäumen unmittelbar mit dem Schaumkörperteil 18 verbunden wird. Bei dem Haftverschlußteil 26 handelt es sich wiederum um einen sogenannten Mikrohaftverschluß mit Verhakungselementen aus thermoplastischem Werkstoff mit der Form von auf kurzen Stengeln sitzenden Verhakungsköpfen. Ein Verfahren zum Herstellen eines dahingehenden Mikrohaftverschlusses ist durch die DE 198 28 856 C1 bekannt. Bei diesem bekannten Verfahren zur Herstellung eines Haftverschlußteiles mit einer Vielzahl von einstückig mit einem Träger ausgebildeten Verhakungsmitteln wird ein thermoplastischer Kunststoff einem Spalt zwischen einem Druckwerkzeug und einem Formwerkzeug zugeführt (nicht dargestellt), bei dem als formgebendes Element am Formwerkzeug ein durchgehende Hohlräume aufweisendes Sieb verwendet wird und bei dem die Verhakungsmittel dadurch gebildet sind, daß der thermoplastische Kunststoff in den Hohlräumen des Siebes erhärtet. Ferner wird ein solches Formwerkzeug verwendet, das an der vom Druckwerkzeug abgekehrten Seite des Siebes ein mit dessen Hohlräumen zusammenwirkendes zweites formgebendes Element aufweist, durch das der thermoplastische Kunststoff geformt wird.

Der Träger mit den Verschlußteilen kann dabei auf seiner Rückseite ein geeignetes das Eindringen von Schaummaterial beim Anschäumen begünstigendes Material (nicht dargestellt) aufweisen, beispielsweise ein Vlies. Alternativ könnte ein doppelseitiges Haftverschlußelement vorgesehen sein, das an seiner Rückseite ebenfalls Verhakungselemente oder Verschlußteile aufweist, zwischen die das Schaummaterial beim Schäumvorgang zur Bildung des Schaumkörperteiles 18 eindringt.

Die Fig. 1 zum Stand der Technik zeigt den Zustand, bei dem die Faltung 12 des Bezuges 10 in die Vertiefung 16 des Schaumkörperteiles 18 teilweise eingeführt ist, kurz bevor es zur Verankerung kommt. Diese erfolgt durch Verhakung zwischen dem Haftverschlußteil 26 und einem Flauschelement 28 als weiteres Haftverschlußteil, das sich entlang der Faltung 12 des Bezuges 10 in einer durchgehenden Lage, über im wesentlichen den gesamten in der Vertiefung 16 aufnehmbaren Bereich der Faltung 12 erstreckt. Das weitere Haftverschlußteil 28 ist mit der Außenseite der Faltung 12 nicht unmittelbar verbunden, sondern über ein dazwischen liegendes Formelement, das durch ein Schaumstoffpolster 30 gebildet ist. Das Schaumstoffpolster 30, das eine die Breite der Faltung 12 merklich vergrößernde Dicke besitzt, kommt beim weiteren Hineindrücken der Faltung 12 in die Vertiefung 16, wenn also die Faltung 12 aus der in der Fig. 1 gezeigten Stellung tiefer in die Vertiefung 16 eingedrückt wird, in Mehrfachfunktion zur Wirkung. Zum einen kommt es durch die Nachgiebigkeit des Schaumstoffpolsters 30 zu einer Verbreiterung der Aufstandsfläche, in der die Kontaktierung zwischen Haftverschlußteil 26 und weiterem Haftverschlußteil 28 in Form des Flauschelementes stattfindet. Zum anderen bewirkt die Nachgiebigkeit des Schaumstoffpolsters 30 eine Relativbeweglichkeit zwischen Flauschelement 28 und den Verschlußelementen des Haftverschlußteiles 26 mit einer zur Einführrichtung geneigten Bewegungskomponente, so daß es zur Verhakung am Mikrohaftverschlußteil 26 kommt. Hierdurch wird erreicht, daß eine sichere Verankerung mit Hilfe eines Mikrohaftverschlußteiles 26 stattfindet, was bislang nur unter Verwendung von haken- und schlaufenförmigen Verankerungsmitteln der Fall war. Während bei diesen ein nachfolgendes Lösen der Verankerung nur durch Herausreißen der Verankerungselemente oder Verschlußteile erfolgen konnte, ergibt sich bei der erfindungsgemäßen Lösung des Mikrohaftverschlußteiles 26 eine definierte Haftkraft, gegen die ein Ausheben der Verschlußteile möglich ist.

In der Fig. 1 ist der Sitzbezug 10 der Einfachheit halber lediglich einlagig dargestellt. Es versteht sich, daß mehrlagige Bezüge mit unterschiedlichen Obermaterialien verwendet werden können, etwa unterschiedliche Stoffbezüge oder Lederbezüge. Bei mehrlagigen Sitzbezügen können die Lagen durch Flammkaschieren miteinander verbunden sein, beispielsweise unter Zwischenlage von Zwischenpolster- oder Dämpferschichten in Form einer oder mehrerer Schaumstofflagen.

Das Schaumstoffpolster 30 kann auf verschiedene geeignete Weise mit der Faltung 12 verbunden werden, beispielsweise durch Nähen. Das Schaumstoffpolster 30 kann ein Kautschukmaterial enthalten oder ein PUR-Schaum sein. An der Außenseite des Schaumstoffpolsters 30 kann das Flauschelement in Form des weiteren Haftverschlußteiles 28 auf beliebige geeignete Weise befestigt sein, beispielsweise durch Kleben, Flammkaschieren oder Anschäumen. Das Flauschelement 28 kann aus unterschiedlichen ein Verhaken mit dem Haftverschlußteil 26 ermöglichenden Materialien gebildet sein, beispielsweise durch einen Veloursstoff. An der dem Schaumstoffpolster 30 zugekehrten Rückseite kann das Flauschelement 28 seinerseits wiederum ein Haftverschlußteil (nicht dargestellt) aufweisen, dessen Verhakungselemente in das Schaumstoffpolster 30 eingeschäumt sind oder mit diesen verhakt.

Im folgenden wird nunmehr die erfindungsgemäße Vorrichtung anhand der Fig. 2 näher erläutert und zwar insofern, als sie sich wesentlich von der vorangegangenen Lösung nach dem Stand der Technik unterscheidet. Dabei werden dieselben Bauteile mit denselben Bezugszeichen wiedergegeben und die bisherigen Ausführungen gelten auch für die nachfolgend beschriebene erfindungsgemäße Lösung.

Bei der Ausführungsform nach der Fig. 2 ist das Haftverschlußteil 26 nicht mehr am nutartigen Grund 20 der Vertiefung 16 angeordnet, sondern vielmehr an den Seitenwänden 22, 24 der Vertiefung 16. Bei einer nicht näher dargestellten Abänderung der dahingehenden Befestigungsmöglichkeit kann auch nur eine Seitenwand, vorzugsweise die innere Seitenwand 22, mit dem Haftverschlußteil 26 versehen sein. In einem dahingehenden Fall braucht auch der Sitzbezug 10 nur noch auf der dem Haftverschlußteil 26 an der Seitenwand 22 zugewandten Seite mit einem Flauschelement als weiteres Haftverschlußteil 28 versehen zu sein. Ferner kann auch das Schaumstoffpolster 30 völlig entfallen, sofern die dahingehend vorteilhaften Angaben bei der Realisierung der erfindungsgemäßen Lösung nicht benötigt werden. Auch braucht das Flauschelement nicht als weiteres Haftverschlußteil 28 ausgebildet sein, sondern kann sich unmittelbar aus der Textur oder Oberfläche des Sitzbezugmaterials ergeben. Eine besonders gute Festhaltewirkung kommt jedoch zustande, sofern, wie in der Fig. 2 dargestellt, an beiden Seitenwänden 22, 24 jeweils das Haftverschlußteil 26 angeordnet ist.

Wie sich des weiteren aus der Fig. 2 ergibt, ist das jeweilige Haftverschlußteil 26, 28 in seiner Längsrichtung biegbar und quer zu seiner Längsrichtung biegesteif ausgebildet in der Vertiefung 16 aufgenommen.

Bei einer nicht näher dargestellten Ausführungsform können auch die Verschlußelemente der beiden Haftverschlußteile 26, 28 (hook anstelle von loop) gegeneinander ausgetauscht werden. Das eine Haftverschlußteil 26 ist jedenfalls als Mikrohaftverschlußteil mit 50 bis 400 Verhakungsköpfen pro cm² ausgebildet. Als korrespondierendes Gegenteil besteht das Flauschelement 28 vorzugsweise aus textilem Material mit kleinen oberflächlichen Schlaufen oder aus einem Veloursstoff, einem Filz oder dergleichen. Wie des weiteren die Fig. 2 zeigt, ist der eine Haftverschlußteil 26 an der jeweiligen Seitenwand 22, 24 der Vertiefung 16 des Polsterschaumteiles schmäler gewählt als die Höhe der jeweiligen Seitenwand 22, 24. Des weiteren ist die Breite der nutartigen Vertiefung 16 größer gewählt als der Verbund aus Haftverschluß mit den Haftverschlußteilen 26, 28 sowie dem zugeordneten Sitzbezug 10 mit Flauschelement 28 und gegebenenfalls mit Schaumstoffpolster 30. Damit das eine Haftverschlußteil 26 zum Festlegen in eine Einschäumform dort verbleibt, kann diese mit Permanentmagneten versehen sein, die mit einer magnetischen Beschichtung des Haftverschlußteiles 26 zusammenwirken. Die beiden Seitenwänden 22, 24 können senkrecht auf dem Nutengrund 20 der Vertiefung 16 stehen; sie können jedoch auch einen demgegenüber geneigten Verlauf (nicht dargestellt) aufweisen.

Unter Verwendung der Biegeschlaffheit in Längsrichtung des jeweiligen Haftverschlußteiles 26, 28 läßt sich jedoch weitgehend gestalterisch frei Verlegungsmöglichkeiten auch in komplizierten dreidimensionalen Sitzgeometrien erreichen. Durch die erhöhte Kontaktfläche der beiden Haftverschlußteile 26, 28 entlang der jeweiligen Seitenwand 22, 24 sind darüber hinaus höhere Haltekräfte zum Festlegen des Sitzbezuges 10 am Schaumkörperteil 18 erreichbar.

Die jeweilige Seitenwand 22,24 kann quer, also senkrecht stehend auf dem nutartigen Grund 20 der Vertiefung 16 angeordnet sein, aber auch schräg verlaufend. Auch kann eine Seitenwand vertikal stehend angeordnet sein und die andere den schrägen Verlauf aufweisen. Vorzugsweise sind jedoch beide Seitenwände 22,24 mit einer geringen Schrägneigung gegenüber dem nutartigen Grund 20 versehen, beispielsweise in Form einer Neigung von 2° bis 5°, um derart das Ausformen aus der Schäumform zu erleichtern. Insbesondere sind dann die Seitenwände 22,24 zum nutartigen Grund 20 der Vertiefung 16 hin konisch aufeinander zulaufend angeordnet.

## Patentansprüche

1. Vorrichtung zum Befestigen eines Bezuges (10) an einem Schaumkörperteil (18), insbesondere einem Polsterschaumteil, für einen Flugoder Fahrgastsitz, wobei die Vorrichtung mit einem in einer nutartigen Vertiefung (16) des Schaumkörperteils (18) befestigbaren ersten Haftverschlußteil (26) mit einer Art an Verschlußteilen und mit einem zur Bildung eines lösbaren Haftverschlusses mit diesem Haftverschlußteil (26) verbindbaren zweiten Haftverschlußteil (28) mit einer zur ersten Art korrespondierenden zweiten Art an Verschlußteilen versehen ist, wobei das zweite Haftverschlußteil (28) an einem in der Vertiefung (16) aufnehmbaren Teil des Bezuges (10) angebracht werden kann, wobei quer oder schräg verlaufend zum nutartigen Grund (20) der Vertiefung (16) der erste Haftverschlußteil (26) an mindestens einer Seitenwand (22,24) der Vertiefung (16) des Schaumkörperteils (18) angeordnet werden kann, **dadurch gekennzeichnet, daß** das eine Haftverschlußteil (26,28) in seiner Längsrichtung biegbar und quer zu seiner Längsrichtung biegesteif ausgebildet ist.

2. Vorrichtung nach Anspruch 1, **dadurch gekennzeichnet, daß** das eine Haftverschlußteil (26) als eine Art an Verschlußteilen Stengel mit Verdickungen als Verhakungsköpfe aufweist.

3. Vorrichtung nach Anspruch 2, **dadurch gekennzeichnet, daß** das erste Haftverschlußteil (26) ein Mikrohaftverschlußteil ist mit 50 bis 400 Verhakungsköpfen pro cm².

4. Vorrichtung nach Anspruch 3, **dadurch gekennzeichnet, daß** das zweite Haftverschlußteil (28) als zweite Art an Verschlußteilen ein für die Verhakung mit dem Mikrohaftverschlußteil vorgesehenes Flauschelement (28) ist, vorzugsweise aus textilem Material mit kleinen oberflächlichen Schlaufen oder aus einem Veloursstoff, einem Filz oder dergleichen besteht.

5. Vorrichtung nach einem der Ansprüche 1 bis 4, **dadurch gekennzeichnet, daß** der erste Haftverschlußteil (26) an der jeweiligen Seitenwand (22, 24) der Vertiefung (16) des Polsterschaumteiles schmäler gewählt ist als die Höhe der jeweiligen Seitenwand (22, 24).

6. Vorrichtung nach einem der Ansprüche 1 bis 5, **dadurch gekennzeichnet, daß** die Breite der nutartigen Vertiefung (16) größer gewählt ist als der Verbund aus Haftverschluß (26, 28) mit zugeordnetem Sitzbezug (10).

7. Vorrichtung nach einem der Ansprüche 1 bis 6, **dadurch gekennzeichnet, daß** das erste Haftverschlußteil (26) zum Festlegen in einer Einschäumform mit Permanentmagneten mit einer magnetischen Besch ichtung versehen ist.

8. Vorrichtung nach einem der Ansprüche 1 bis 7, **dadurch gekennzeichnet, daß** beide Seitenwände (22, 24), die quer zum Nutgrund (20) der Vertiefung (16) verlaufen, mit einem Haftverschlußteil (26) der ersten Art versehen sind.

## Claims

1. Device for fixing a cover (10) to a foam body portion (18), in particular an upholstery foam portion, for an aircraft or vehicle seat, the device being provided with a first fastening closure part (26), which can be fixed in a slot-like recess (16) of the foam body portion (18) and which has one type of closure part, and a second fastening closure part (28), which can be connected to this fastening closure part (26) in order to form a releasable fastening closure and which has a second type of closure part corresponding to the first type, the second fastening closure part (28) being able to be fitted to a portion of the cover (10) that can be received in the recess (16), the first fastening closure part (26) being able to be arranged on at least one side wall (22, 24) of the recess (16) of the foam body portion (18) so as to extend in a transverse or oblique manner relative to the slot-like base (20) of the recess (16), **characterised in that** the one fastening closure part (26, 28) is formed so as to be bendable in the longitudinal direction thereof and so as to be rigid transversely to the longitudinal direction thereof.

2. Device according to claim 1, **characterised in that** one fastening closure part (26) has, acting as one type of closure part, stems having thickenings in the form of hooking heads.

3. Device according to claim 2, **characterised in that** the first fastening closure part (26) is a micro fastening closure part having from 50 to 400 hooking heads per cm².

4. Device according to claim 3, **characterised in that** the second fastening closure part (28), acting as a second type of closure part, is a pad element (28) provided for the hooking engagement with the micro fastening closure part, which pad element (28) preferably comprises textile material having small surface loops or a velour material, a felt or the like.

5. Device according to any one of claims 1 to 4,
**characterised in that** the first fastening closure part (26) on the respective side wall (22, 24) of the recess (16) of the upholstery foam portion is selected so as to be narrower than the height of the respective side wall (22, 24).

6. Device according to any one of claims 1 to 5,
**characterised in that** the width of the slot-like recess (16) is selected so as to be larger than the combination of the fastening closure (26, 28) with the associated seat cover (10).

7. Device according to any one of claims 1 to 6,
**characterised in that** the first fastening closure part (26) is provided with a magnetic coating for being fixed in a foaming mould by means of permanent magnets.

8. Device according to any one of claims 1 to 7,
**characterised in that** both side walls (22, 24), which extend transversely to the slot base (20) of the recess (16), are provided with a fastening closure part (26) of the first type.

## Revendications

1. Dispositif de fixation d'un habillage (10) sur un corps en mousse (18), en particulier une pièce de rembourrage en mousse pour un siège avion ou un siège de passager automobile, le dispositif étant formé par une première pièce de fixation par accrochage (26), qui peut être fixée dans une cavité (16) en forme de gorge, réalisée dans le corps en mousse (18), et qui est munie d'un type d'éléments d'accrochage, et par une deuxième pièce de fixation par accrochage (28) qui peut être assemblée avec ladite pièce de fixation par accrochage (26) pour former un assemblage par accrochage amovible, et qui est muni d'un deuxième type d'éléments d'accrochage correspondant au premier type, la deuxième pièce de fixation par accrochage (28) pouvant être agencée contre une partie de l'habillage (10) destinée à être logée dans la cavité (16), la première pièce de fixation par accrochage (26) pouvant être agencée contre au moins une paroi latérale (22, 24) de la cavité (16) dans le corps en mousse (18) en s'étendant transversalement ou en oblique par rapport au fond en forme de gorge (20) dans la cavité (16), **caractérisé en ce que** l' une des pièces de fixation par accrochage (26, 28) est flexible dans le sens longitudinal et est rigide transversalement à son sens longitudinal.

2. Dispositif selon la revendication 1, **caractérisé en ce que** l'une des pièces de fixation par accrochage (26) comporte des petites tiges formant un type d'éléments d'accrochage et terminées par des renflements formant des têtes d'accrochage.

3. Dispositif selon la revendication 2, **caractérisé en ce que** la première pièce de fixation par accrochage (26) est une micro-pièce de fixation par accrochage avec 50 à 400 têtes d'accrochage par cm².

4. Dispositif selon la revendication 3, **caractérisé en ce que** la deuxième pièce de fixation par accrochage (28) comporte comme deuxième type d'éléments d'accrochage un élément à poils (28), qui est prévu pour s'agripper à la micro-pièce de fixation par accrochage et qui est réalisé de préférence dans un matériau textile muni de petites boucles en surface ou dans un tissu de velours, un feutre ou une matière similaire.

5. Dispositif selon l'une quelconque des revendications 1 à 4, **caractérisé en ce que** la première pièce de fixation par accrochage (26) fixée au niveau de la paroi latérale (22, 24) correspondante de la cavité (16) dans le corps de rembourrage est choisie avec une largeur inférieure à la hauteur de la paroi latérale (22, 24) correspondante.

6. Dispositif selon l'une quelconque des revendications 1 à 5, **caractérisé en ce que** la largeur de la cavité (16) en forme de gorge est plus grande que l'ensemble formé par les pièces de fixation par accrochage (26, 28) avec l'habillage de siège (10) associé.

7. Dispositif selon l'une quelconque des revendications 1 à 6, **caractérisé en ce que** la première pièce de fixation par accrochage (26) est munie d'un revêtement magnétique pour être bloquée dans un moule de moussage muni d'aimants permanents.

8. Dispositif selon l'une quelconque des revendications 1 à 7, **caractérisé en ce que** les deux parois latérales (22, 24), qui s'étendent transversalement au fond de la gorge (20) de la cavité (16), sont munies d'une pièce de fixation par accrochage (26) du premier type.
